# EUROPÄISCHE PATENTSCHRIFT

(11) **EP 0 862 001 B1**
(45) Veröffentlichungstag und Bekanntmachung des Hinweises auf die Patenterteilung: **17.07.2002**
(21) Anmeldenummer: 98100352.8
(22) Anmeldetag: 12.01.1998
(51) Int. Cl.: F16K 13/00, B64G 1/62, B64D 1/14

(54) **Sprengventil zur Freigabe von Öffnungen von Airbag-Landesystemen**
Explosive valve for the venting of airbag landing systems
Vanne explosive pour l'ouverture de systèmes d'atterrissage à coussin gonflable

(30) Priorität: 28.02.1997 DE 19708158
(43) Veröffentlichungstag der Anmeldung: 02.09.1998
(73) Patentinhaber: Astrium GmbH, 81663 München (DE)
(72) Erfinder: Wagner, Adalbert, Dipl.-Ing., 83739 Radthal (DE)
(74) Vertreter: Ulrich, Thomas

(56) Entgegenhaltungen:
- DE-A- 2 427 790
- DE-A- 4 118 300
- FR-A- 2 071 196
- US-A- 3 983 892
- TURNER C T, GIRARD L A: "Air Bag Impact Attenuation System for the AQM-34V Remote Piloted Vehicle" JOURNAL OF AIRCRAFT, Bd. 19, Nr. 11, November 1982, Seiten 984-989, XP002065728

## Beschreibung

Die vorliegende Erfindung betrifft ein Sprengventil zur Freigabe von Öffnungen von Airbag-Landesystemen für Flugund Raumfahrtgeräte, bestehend aus einer Schneidladung mit Zünder und aus einer die Öffnung verschliessenden Abdekkung, die bei Zündung der Schneidladung abgeschert wird.

Derartige Airbag-Landesysteme kommen zur Anwendung bei der Landung von Lasten, die von Flugzeugen abgesetzt werden, wie Paletten, Flugkörpern, Drohnen etc. mittels Fallschirmen oder Gleitschirmen sowie bei der Landung von Raumfahrtgeräten, wie Kapseln und dgl. Das Airbag-Landesystem hat dabei die Aufgabe, das Flug- oder Raumfahrtgerät innerhalb bestimmter vorgegebener maximaler Verzögerungswerte abzubremsen. Während der relativ kurzen Abbrems- oder Dämpfungszeit bei der Landung, d.h. beim Aufprall auf den Boden, von etwa 0,1 bis 0,2 sec ist ein präzises Freigeben der zum Ausströmen des Airbag-Landesystems dienenden Öffnungen erforderlich. Oftmals ist es sogar wünschenswert, zu einem bestimmten Zeitpunkt innerhalb weniger Millisekunden die zum Ausströmen dienenden Öffnungen freizugeben.

Wegen der grossen Menge an ausströmender Gase z.B. Luft, welche bei Kapseln bis zu 7 t Landegewicht etwa 14 m³ betragen kann, sind dabei relativ grosse Querschnitte der Öffnungen ( z.B. bis zu einem Durchmesser von 400 mm bei 8 Kammern) erforderlich.

Aus der DE-C-24 27 790 ist ein durch Sprengkraft auslösbares Freigabeventil für Druckbehälter bekannt, das z.B. bei Feuerlöscheinrichtungen Anwendung findet, um ein in einem Behälter befindliches unter hohem Druck stehendes Medium schlagartig austreten zu lassen, z.B. zur Erstickung einer Explosionsflamme. Das Freigabeventil weist dabei eine die Öffnung überdeckende Bruchplatte auf, die mit einer ihren Mittenbereich umgebenden mit Sprengstoff gefüllten Ringnut versehen ist, wobei die Bruchplatte eine zweite Ringnut aufweist und die beiden Ringnuten in jeweils einer der beiden Stirnflächen der Bruchplatte radial so nahe beieinander angeordnet sind, dass sie zwischen sich einen im wesentlichen senkrecht zu den Stirnflächen der Bruchplatte orientierten Ringwandbereich begrenzen, dessen Dicke geringer als die Plattendicke ist. Damit wird im Auslösefall unter Verwendung von wenig Sprengstoff ein radiales Abscheren des Ringwandbereiches ermöglicht.

Die DE-C-195 31 294 beschreibt ein Druckbehältnis mit mindestens einer Ausströmöffnung für das gespeicherte Druckmedium, einem Verschlussorgan sowie pyrotechnischen Mitteln zum Öffnen des Verschlussorgans, wobei sich zwischen einer den Öffnungsquerschnitt versperrenden Berstmembran und einer der Berstmembran, in Ausströmrichtung gesehen, mit Abstand vorgeordneten Lochplatte eine Treibladung zur Berstdruckerzeugung mit zugeordneten Anzündmitteln befindet und wobei zwischen der Treibladung und der Lochplatte ein Platz vorhanden ist, für eine in Richtung der Plattennormalen beweglichen Scheibe zum Schliessen der Plattenlöcher während des Berstdruckaufbaus.

Aufgabe der vorliegenden Erfindung ist es, ein Sprengventil zur Freigabe von Öffnungen von Airbag-Landesystemen für Flug- und Raumfahrtgeräte zu schaffen, wobei die Freigabe der Öffnungen in herkömmlicher Weise durch eine mit einem Zünder versehenen Schneidladung erfolgt, das eine hohe Zuverlässigkeit bei geringem Bauaufwand bietet, mit dem ein schnelles Auslösen im Millisekundenbereich ermöglicht wird, bei dem der Zeitpunkt des Auslösens sicher einstellbar ist und bei dem eine axiale Querschnittsfreigabe gewährleistet ist.

Ausgehend von einem Sprengventil der eingangs näher genannten Art erfolgt die Lösung dieser Aufgabe mit den in den kennzeichnenden Teilen der Ansprüche 1 und 5 angegebenen Merkmalen; vorteilhafte Ausgestaltungen sind in den zugehörigen Unteransprüchen beschrieben.

Das erfindungsgemässe Sprengventil zur Betätigung eines Airbag-Landesystems für Flug- und Raumfahrtgeräte ermöglicht ein Absprengen der Abdeckung axial in Ausströmrichtung des zum Aufblasen des Airbag-Landesystems verwendeten Gases, wodurch die Abdeckung nach aussen hin durch die Sprengwirkung weggeschleudert wird und nicht erst durch das Ausströmen der Gase beschleunigt wird. Dies führt zu einer schnelleren Querschnittsfreigabe der Öffnung. Dies ist besonders vorteilhaft, da nur geringe Druckunterschiede vorhanden sind.

Ferner wird die Wahrscheinlichkeit verringert, dass einzelne zerstörte Teile der Abdeckung im Austrittsquerschnitt der freigegebenen Öffnung hängen bleiben, da die Abdeckung aussen liegt.

Die Abdeckung selbst in Form einer dünnwandigen Scheibe oder einer flexiblen Membran kann wesentlich leichter und dünner ausgebildet werden, da sie axial und nicht radial zerstört wird. Dadurch wird das Sprengventil weniger komplex und leichter im Aufbau.

Eine Beeinträchtigung der das Sprengventil umgebenden Bauteile durch die Sprengung selbst wird durch die axiale Wirkungsrichtung ausgeschlossen, da die Sprengwirkung und eine mögliche Kontamination nach aussen gerichtet sind.

Im folgenden wird die Erfindung anhand der Zeichnung näher erläutert, in der zwei vorteilhafte Ausführungsbeispiele dargestellt sind. Es zeigen:
- Figur 1: ein Raumfahrtgerät mit darin integrierten erfindungsgemässen Sprengventilen sowie einem Airbag-Landesystem;
- Figur 2: eine vergrösserte Schnittdarstellung der Anordnung des Sprengventils;
- Figur 3: einen Teil der Schnittdarstellung von Figur 2,
- Figur 4: eine teilweise Draufsicht auf ein Sprengventil;
- Figur 5: ein Raumfahrtgerät mit dem dazugehörigen Airbag-Landesystem und darin integrierten Sprengventilen, und
- Figuren 6 und 7: vergrösserte Schnittdarstellungen durch ein Sprengventil, welches in das Airbag-Landesystem integriert ist.

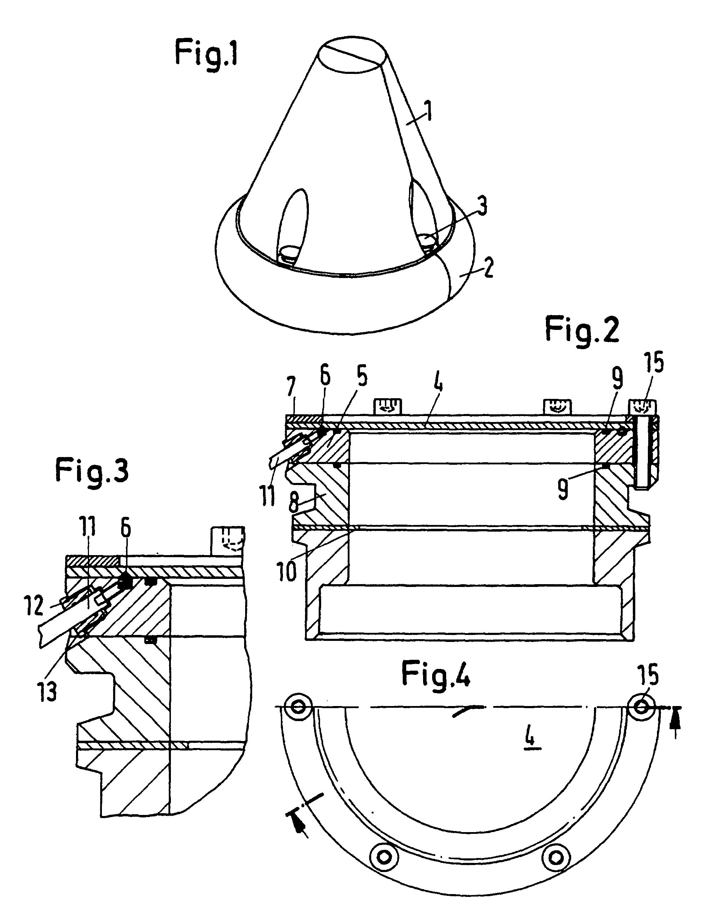

Wie Figur 1 erkennen lässt, ist ein Raumfahrtgerät, beispielsweise eine Kapsel 1 mit einem, sich bei der Landung aufblasendes und dadurch den Landeaufprall dämpfendes Airbag-Landesystem 2 versehen, wobei hierbei an der Verbindungsstelle zwischen Airbag-Landesystem 2 und Kapsel 1 eine Vielzahl von erfindungsgemäss ausgestalteten Sprengventilen 3 vorgesehen sind, welche dafür sorgen, dass das Airbag-Landesystem 2 durch die einzelnen Sprengventile zu einem exakt bestimmten Zeitpunkt entlüften kann.

Die Sprengventile 3, die fest mit der Kapsel verbunden sind, werden durch (nicht dargestellte) Druckmelder oder Abstandsmelder betätigt, wobei die Druckmelder ein Öffnen unmittelbar nach dem Aufprall und die Abstandsmelder ein Öffnen unmittelbar vor dem Aufprall bewirken. Gemäss dem in den Figuren 1 bis 4 dargestellten Ausführungsbeispiel ist die Abdeckung 4 eines jeden Sprengventils 3 eine dünnwandige Scheibe, entlang deren Umfangs eine Schneidladung 6 in Form einer Sprengschnur angeordnet ist und wobei jeder Sprengschnur zwei Zünder aus Redundanzgründen zugeordnet sind. Die Zünder 11 und die Schneidladung 6 sind dabei in einem Montagering 5 angeordnet, der an der abzuscherenden dünnwandigen Scheibe 4 unmittelbar anliegt und als Halterung für Zünder 11, Sprengschnur 6 und Dichtungen 9 dient.

Ferner ist auf der dem Montagering 5 abgewandten Seite der abzuscherenden Scheibe 4 ein die Schneidstelle begrenzender Stützring 7 vorgesehen, während auf der der Scheibe 4 abgewandten Seite des Montageringes 5 ein Adapter 8 anliegt, der zur Montage des Sprengventils auf vorhandene Flanschsysteme und als Puffer zwischen den durch die Sprengung zerstörten Opferteilen und dem eigentlichen Flansch mit einer gegebenenfalls einstellbaren Blende 10 dient, die nach dem Auflösen des Sprengventils unversehrt bleiben. Mit der Blende 10 können verschiedene Öffnungsquerschnitte bei gleicher Sprengeinheit eingestellt werden.

Die zum Durchtrennen der Scheibe 4 verwendete Schneidladung mit den beiden Zündern kann dabei aus handelsüblichen Komponenten realisiert werden. Die durch die Sprengschnur 6 abzuscherende Scheibe 4, die die Öffnung nach aussen gegenüber dem Umgebungsdruck abdichtet, kann z.B. aus Aluminium oder aber auch aus Kunststoff, wie z.B. PVC, PTFE, GFK, CFK bestehen, wobei die vorgesehene Einkerbung als Sollbruchstelle nicht in jedem Fall notwendig ist; dies hängt vom verwendeten Material, der Druckbelastung bei Innendruck, der Dicke der Scheibe bzw. der Sprengkraft der Schneidladung ab.

Der Montagering 5, der die Zünder, die Schneidladung und gegebenenfalls Dichtungen trägt, besteht vorteilhafterweise aus einer Aluminiumlegierung, wobei der Zünder 11 mittels einer geeigneten Verschraubung 12 und zugehörigen Dichtungen 13 eingesetzt ist (Figur 3). Mit 15 sind schliesslich noch Verschraubungen bezeichnet, die das Sprengventil zusammenhalten.

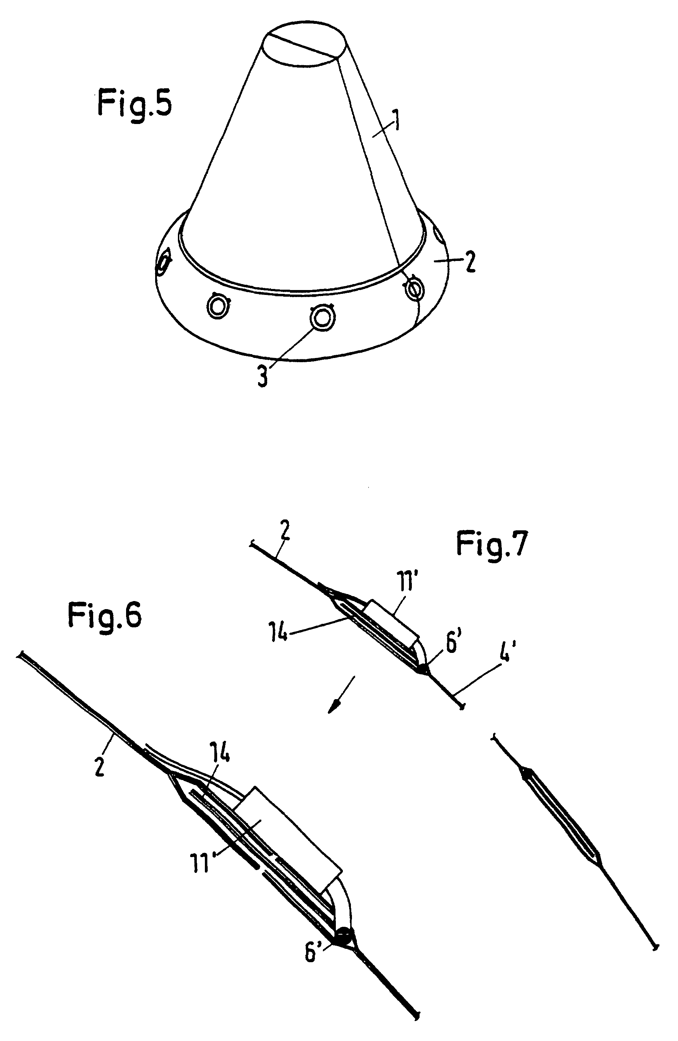

Bei dem in den Figuren 5 bis 7 dargestellten Ausführungsbeispiel ist das erfindungsgemäss ausgestaltete Sprengventil nicht in die Kapsel 1, sondern in das Airbag-Landesystem 2 integriert, wobei auch hier eine Vielzahl von Sprengventilen 3 (Figur 5) vorgesehen sind, welche mit einzelnen Airbagkammern in Verbindung stehen, um bei der Landung des Luft- oder Raumfahrtkörpers 1 das Airbag-Landesystem zu entlüften.

Figuren 6 und 7 lassen erkennen, dass hierbei die Abdeckung 4' aus einer flexiblen Membran besteht, welche von einer sie umgebenden Randversteifung 14 begrenzt ist. Auf der Aussenseite der Randverstärkung 14 sind für jedes Sprengventil zwei Zünder 11' vorgesehen, die z.B. aufgeklebt sind. Die Schneidladung 6' in Form einer Sprengschnur ist an der Verbindungsstelle zwischen Randversteifung 14 und flexibler Membran 4' angeordnet und vorzugsweise in die Randversteifung eingeschweisst oder eingeklebt.

Das fest installierte Sprengventil bei diesem Ausführungsbeispiel ist aufgrund seiner kostengünstigen Austauschteile sowohl für Bodentests als auch für Flughardware geeignet. Bei dem in das Airbag-Landesystem 2 integrierten Sprengventil 3 ist der Austausch von Gewebeteilen des Landesystems nach erfolgter Ventilöffnung zwar aufwendiger und teurer, jedoch benötigt dieses Ausführungsbeispiel erheblich weniger Gewicht, weshalb es für einen langen Flugeinsatz besonders geeignet ist.

Die in die Randversteifung 14 eingeklebte Schneidladung stützt sich nicht wie beim Ausführungsbeispiel nach Figuren 1 bis 4 auf einen festen Flansch ab, sondern wirkt frei auf die Oberfläche der Membran 4'. Dadurch wird aufgrund der gezielten Explosion entlang der Schneidladung das Gewebe der Membran 4' durchtrennt und die gewünschte Öffnung freigegeben. Die beiden Zünder pro Sprengventil können nicht nur aussen, sondern auch innen neben der Schneidladung 6' angeordnet bzw. auf das Landesystem geklebt werden.

Die dünne Membran 4' beinhaltet die Sollbruchstelle und die Schneidladung des Ventils und begrenzt wegen der umlaufenden Randversteifung 14 die Wirkung der Sprengladung auf den Öffnungsquerschnitt. Durch Anbringen von Öffnungsventilen mit verschiedenen Durchmessern können verschiedene Ausströmquerschnitte realisiert werden.

Für beide Ausführungsbeispiele gilt, dass das Airbaglandesystem mit mehreren Sprengventilen ausgestattet ist, welche insbesondere zur gleichen Zeit und im Millisekundenbereich geöffnet werden können. Aus Stabilitätsgründen soll ein Taumeln oder Kippen des Luft- oder Raumfahrtgerätes nach der Landung verhindert werden, so dass nicht sämtliche Sprengventile gleichzeitig geöffnet werden sollen bzw. je nach Aufschlagrichtung nur bestimmte Sprengventile geöffnet werden sollen. Der vorgesehene aktive Öffnungsmechanismus mit Hilfe von Druckmeldern und/oder Abstandsmeldern sorgt für das zeitgerechte Öffnen der einzelnen Sprengventile.

## Patentansprüche

1. Sprengventil zur Freigabe von Öffnungen von Airbag-Landesystemen (2) für Flug- und Raumfahrtgeräte (1), bestehend aus einer Schneidladung (6) mit Zünder (11) und einer die Öffnung verschließenden Abdeckung (4), die bei Zündung der Schneidladung abgeschert wird, **gekennzeichnet durch** die folgende Kombination:
a) die Abdeckung ist eine dünnwandige Scheibe,
b) der Schneidladung ist ein zweiter Zünder zugeordnet,
c) die Zünder und die Schneidladung sind in einem Montagering (5) angeordnet, der an der abzuscherenden Scheibe anliegt,
d) auf der dem Montagering abgewandten Seite der abzuscherenden Scheibe ist ein die Schneidstelle begrenzender Stützring (7) vorgesehen, der die abzuscherende Scheibe umgibt,
e) die der abzuscherenden Scheibe abgewandte Seite des Montageringes liegt an einem Adapter (8) an,
f) auf der dem Montagering abgewandten Seite des Adapters ist eine den Öffnungsdurchmesser begrenzende Blende (10) vorgesehen.

2. Sprengventil nach Anspruch 1, **dadurch gekennzeichnet, daß** die Schneidladung (6) eine Sprengschnur ist, die einerseits in eine Nut im Montagering (5) und andererseits in eine entsprechende Nut in der Scheibe (4) eingelegt ist.

3. Sprengventil nach einem der vorhergehenden Ansprüche, **dadurch gekennzeichnet, daß** der Blendendurchmesser einstellbar ist.

4. Sprengventil nach einem der vorhergehenden Ansprüche, **dadurch gekennzeichnet, daß** desweiteren Druckmelder oder Abstandsmelder vorgesehen sind, die die Zünder (11) auslösen.

5. Sprengventil zur Freigabe von Öffnungen von Airbag-Landesystemen (2) für Flug- und Raumfahrtgeräte (1), bestehend aus einer Schneidladung (6') mit Zünder (11') und einer die Öffnung verschließenden Abdeckung (4'), die bei Zündung der Schneidladung abgeschert wird, **gekennzeichnet durch** die folgende Kombination:
a) der Schneidladung ist ein zweiter Zünder zugeordnet,
b) die Scheibe ist eine flexible Membran,
c) die Membran ist von einer sie umgebenden Randversteifung (14) begrenzt,
d) auf der Außenseite der Randversteifung sind die zwei Zünder angeordnet,
e) die Schneidladung ist an der Verbindungsstelle zwischen Membran und Randversteifung in letztere eingeschweißt.

6. Sprengventil nach Anspruch 5, **dadurch gekennzeichnet, daß** die Schneidladung (6') eine Sprengschnur ist.

7. Sprengventil nach einem der Ansprüche 5 oder 6, **dadurch gekennzeichnet, daß** desweiteren Druckmelder oder Abstandsmelder vorgesehen sind, die die Zünder (11') auslösen.

## Claims

1. Explosive valve for releasing openings of airbag landing systems (2) for aircraft and space craft (1), comprising a cutting charge (6) having an ignition device (11) and a cover (4) which closes the opening and which is sheared off when the cutting charge is ignited, **characterised by** the following combination:
a) the cover is a thin-walled disc,
b) a second ignition device is associated with the cutting charge,
c) the ignition devices and the cutting charge are arranged in an assemblyring (5) which abuts the disc to be sheared off,
d) a support ring (7) which delimits the cutting region and which surrounds the disc to be sheared off is provided at the side of the disc to be sheared off that is remote from the assembly ring,
e) the side of the assembly ring that is remote from the disc to be sheared off abuts an adapter (8),
f) a stop (10) which delimits the opening diameter is provided at the side of the adapter that is remote from the assembly ring.

2. Explosive valve according to claim 1, **characterised in that** the cutting charge (6) is an explosive cord which is inserted, on the one hand, into a channel in the assembly ring (5) and, on the other hand, into a corresponding channel in the disc (4).

3. Explosive valve according to one of the preceding claims, **characterised in that** the stop diameter is adjustable.

4. Explosive valve according to any one of the preceding claims, **characterised in that** there are further provided pressure sensors or distance sensors which trigger the ignition devices (11).

5. Explosive valve for releasing openings of airbag landing systems (2) for aircraft and space craft (1), comprising a cutting charge (6') having an ignition device (11') and a cover (4') which closes the opening and which is sheared off when the cutting charge is ignited, **characterised by** the following combination:
a) a second ignition device is associated with the cutting charge,
b) the disc is a flexible membrane,
c) the membrane is delimited by an edge reinforcement (14) which surrounds it,
d) the two ignition devices are arranged outside the edge reinforcement,
e) the cutting charge is bonded to the edge reinforcement at the connection region between the membrane and the edge reinforcement.

6. Explosive valve according to claim 5, **characterised in that** the cutting charge (6') is an explosive cord.

7. Explosive valve according to either claim 5 or claim 6, **characterised in that** there are further provided pressure sensors or distance sensors which trigger the ignition devices (11').

## Revendications

1. Soupape d'explosion destinée à libérer des orifices de systèmes d'atterrissage à airbag (2) d'avions et d'engins spatiaux (1), constituée d'une charge de cisaillement (6) comportant un détonateur (11), et d'un couvercle (4) obturant l'orifice, qui est cisaillé lors de la mise à feu de la charge de cisaillement, **caractérisée par** la combinaison suivante :
a) le couvercle est un disque à paroi mince,
b) un deuxième détonateur est associé à la charge de cisaillement,
c) les détonateurs et la charge de cisaillement sont disposés dans un anneau de montage (5) qui prend appui sur le disque à cisailler,
d) sur la face opposée à l'anneau de montage du disque à cisailler, il est prévu un anneau de soutien (7) délimitant le point de cisaillement, qui entoure le disque,
e) la face opposée au disque à cisailler de l'anneau de montage prend appui sur un adaptateur (8),
f) du côté opposé à l'anneau de montage de l'adaptateur, il est prévu un diaphragme (10) limitant le diamètre d'ouverture.

2. Soupape d'explosion selon la revendication 1, **caractérisée en ce que** la charge de cisaillement (6) est un cordeau détonant qui est inséré, d'une part dans une rainure de l'anneau de montage (5), et d'autre part dans une rainure correspondante pratiquée dans le disque (4).

3. Soupape d'explosion selon l'une des revendications précédentes, **caractérisée en ce que** le diamètre du diaphragme est réglable.

4. Soupape d'explosion selon l'une quelconque des revendications précédentes, **caractérisée en ce qu'**il est en outre prévu des capteurs de pression ou des capteurs de proximité qui déclenchent les détonateurs (11).

5. Soupape d'explosion destinée à libérer des orifices de systèmes d'atterrissage à airbag (2) d'avions et d'engins spatiaux (1), constituée d'une charge de cisaillement (6') comportant un détonateur (11'), et d'un couvercle (4') obturant l'orifice, qui est cisaillé lors de la mise à feu de la charge de cisaillement, **caractérisée par** la combinaison suivante :
a) un deuxième détonateur est associé à la charge de cisaillement,
b) le disque est une membrane flexible,
c) la membrane est délimitée par un renforcement de bord (14) l'entourant,
d) les deux détonateurs sont disposés sur la face extérieure du renforcement de bord,
e) au niveau du point de liaison entre la membrane et le renforcement de bord, la charge de cisaillement est soudée dans ce dernier.

6. Soupape d'explosion selon la revendication 5, **caractérisée en ce que** la charge de cisaillement (6') est un cordeau détonant.

7. Soupape d'explosion selon l'une des revendications 5 ou 6, **caractérisée en ce qu'**il est en outre prévu des capteurs de pression ou des capteurs de proximité qui déclenchent les détonateurs (11').
